Europäisches Patentamt

(19) European Patent Office

Office européen des brevets

(11) Numéro de publication : **0 437 411 A1**

# (12) DEMANDE DE BREVET EUROPEEN

(21) Numéro de dépôt : **91420006.8**

(22) Date de dépôt : **07.01.91**

(51) Int. Cl.$^5$ : **H04N 11/18, H04N 9/64**

(30) Priorité : **09.01.90 FR 9000402**

(43) Date de publication de la demande :
**17.07.91 Bulletin 91/29**

(84) Etats contractants désignés :
**CH DE ES FR GB IT LI**

(71) Demandeur : **SGS-THOMSON
MICROELECTRONICS S.A.
7, Avenue Galliéni
F-94250 Gentilly (FR)**

(72) Inventeur : **Douziech, Patrick
56, Rue des Prunelles
F-67560 Rosheim (FR)**

(74) Mandataire : **de Beaumont, Michel
1bis, rue Champollion
F-38000 Grenoble (FR)**

(54) **Codeur/décodeur secam à faible diaphotie.**

(57) La présente invention concerne un codeur/décodeur SECAM. Le codeur comprend des moyens (20, 21) pour envoyer au cours de chaque trame d'une image les signaux de luminance (Y) propres à cette trame et, à chaque deuxième trame, des signaux de sous-porteuse de chrominance identiques à ceux de la trame précédente et opposés en phase. Le décodeur comprend des moyens de filtrage en peigne des signaux de chrominance.

Figure 4

EP 0 437 411 A1

## CODEUR/DECODEUR SECAM A FAIBLE DIAPHOTIE

La présente invention concerne le domaine du codage (émission) et du décodage (réception) de signaux de télévision et plus particulièrement de signaux de télévision couleur codés selon la norme SECAM.

Comme cela est bien connu, dans la norme SECAM, comme d'ailleurs dans les autres normes de télévision couleur usuelles, chaque image est constituée de deux trames comprenant chacune un nombre de lignes moitié de celui de l'image, les lignes de deux trames successives étant entrelacées. On se placera ici dans le cas particulier où chaque image comprend 625 lignes et où deux lignes successives d'une image, appartenant à deux trames successives, sont espacées de la durée de 312 lignes.

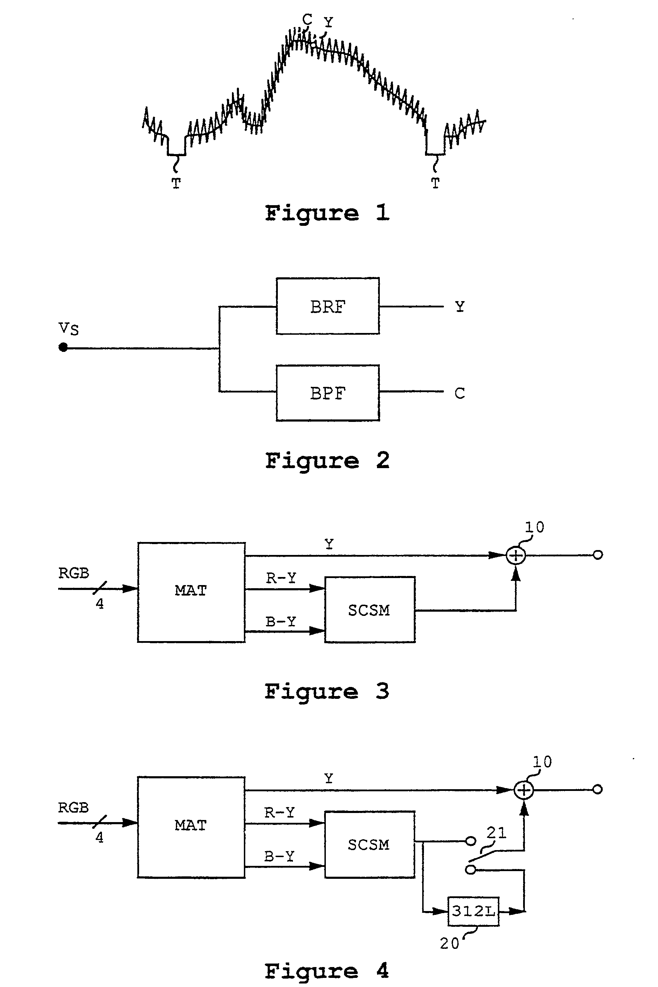

L'une des spécificités de la norme SECAM, illustrée très schématiquement en figure 1, est que chaque ligne comprend, entre deux tops de synchronisation T, un signal de luminance Y auquel est superposé un signal de chrominance C qui est constitué d'une sous-porteuse couleur modulée en fréquence par les informations de chrominance.

Dans la norme SECAM, chaque ligne d'une trame est porteuse d'informations de chrominance relatives à une première couleur, la ligne suivante étant porteuse d'informations de chrominance relatives à une deuxième couleur. On désigne classiquement ces informations par les notations R-Y et B-Y, R désignant le rouge, B le bleu et Y l'information de luminance. Ainsi, une fois que les deux trames sont rassemblées, deux lignes successives d'une image comprennent des informations R-Y et les deux lignes suivantes des informations B-Y et ainsi de suite.

Comme cela est illustré en figure 2, la façon la plus simple de séparer les signaux de luminance Y des signaux de chrominance C contenus dans un signal vidéo d'entrée VS consiste à faire passer ce signal VS d'une part par un filtre à réjection de bande BRF pour obtenir la composante Y sans la composante C et d'autre part un filtre passe-bande BPF pour obtenir la composante de chrominance C.

Toutefois, l'utilisation de tels systèmes de filtrage entraîne des défauts qui dégradent la qualité de l'image et qui sont liés à la diaphotie luminance/chrominance.

La diaphotie de luminance est la visibilité de la sous-porteuse couleur sur l'image. Ce défaut est atténué par la présence du filtre de réjection de bande susmentionné mais, du seul fait de sa présence, un tel filtre diminue de façon significative la définition du signal de luminance qui est par exemple réduite de 6 à 4 MHz. Ceci est particulièrement gênant, car, pour l'impression visuelle que tire le téléspectateur d'une image, c'est la qualité des informations de luminance qui est prédominante.

La diaphotie de couleur est créée quand le spectre du signal de luminance comporte des raies dans la zone de fréquence de la sous-porteuse couleur. Il s'ensuit un effet de moiré coloré visible par exemple sur les zones à structure rayée fine d'une image, ce qui est par exemple le cas quand un personnage filmé porte un costume rayé.

Dans le cadre de signaux codés et décodés selon les normes NTSC ou PAL, on arrive à s'affranchir de façon satisfaisante des deux défauts susmentionnés par une technique de filtrage en peigne des composantes de luminance et de chrominance de l'image. Un tel filtrage en peigne consiste à combiner soustractivement et additivement deux lignes successives d'une image ou d'une trame pour séparer ainsi les composantes de luminance et de chrominance.

Toutefois, ce procédé, appliqué à des signaux de télévision codés selon la norme SECAM ne donne pas de résultats satisfaisants.

Ainsi, un objet de la présente invention est de prévoir un système de codage/décodage de signaux de télévision selon la norme SECAM permettant de s'affranchir des diaphoties de luminance et de chrominance par un filtrage en peigne.

Un autre objet de la présente invention est de prévoir un tel système qui soit compatible avec les téléviseurs existants et dans lequel les téléviseurs modifiés selon l'invention puissent recevoir des signaux classiques.

Pour atteindre ces objets, la présente invention prévoit un codeur/décodeur SECAM dans lequel le codeur comprend des moyens pour envoyer au cours de chaque trame d'une image les signaux de luminance propres à cette trame et, à chaque deuxième trame, des signaux de chrominance identiques à ceux de la trame précédente, et dans lequel le décodeur comprend des moyens de filtrage en peigne des signaux de chrominance.

Ces objets, caractéristiques et avantages ainsi que d'autres de la présente invention seront exposés plus en détail dans la description suivante de modes de réalisation particuliers faite en relation avec les figures jointes parmi lesquelles :

la figure 1 représente de façon grossière un signal de ligne de télévision SECAM ;

la figure 2 représente schématiquement un mode de séparation des composantes luminance et chrominance d'un signal de télévision ;

la figure 3 représente de manière simplifiée la façon classique de coder des signaux d'image ;

la figure 4 illustre schématiquement un système de codage d'image selon la présente invention ; et

la figure 5 représente un système de décodage d'image selon la présente invention.

La présente invention se base sur une analyse du codage des signaux à l'émission selon la norme SECAM et de la cohérence résultante des divers éléments des signaux transmis.

La figure 3 représente très schématiquement un codeur classique utilisé selon la norme SECAM. Les signaux de luminance, avec les signaux de couleur R (rouge), G (vert) et B (bleu), en provenance d'un analyseur tel qu'une caméra vidéo, arrivent sur une matrice MAT qui fournit en sortie, sur une première voie, le signal de luminance Y et, sur deux autres voies, les signaux de chrominance C (R-Y et B-Y). Les signaux R-Y et B-Y sont alternativement transmis à un modulateur SECAM de sous-porteuse (SCSM), pour moduler en fréquence une sous-porteuse. La sous-porteuse modulée est additionnée au signal Y dans un additionneur 10.

Si, à la reception, on veut appliquer un filtrage en peigne à deux lignes distantes de 312 durées de ligne, c'est-à-dire à deux lignes adjacentes d'une image à trames entrelacées, on s'aperçoit que le résultat souhaité n'est pas obtenu.

En effet, pour séparer correctement des signaux par un filtrage, ici les signaux Y et C, il est nécessaire de disposer de deux informations qui soient cohérentes (corrélées) selon trois critères : un critère spatial, un critère temporel et un critère de phase (ici un critère de phase de la sous-porteuse couleur).

Dans une image SECAM, la corrélation spatiale est naturellement bonne entre deux lignes n et n+312, puisque ce sont deux lignes successives d'une même image.

La corrélation temporelle de deux lignes n et n+312 n'est assurée que si l'analyse de l'image est effectuée en analysant les deux trames successives de cette image sans décalage temporel (pas de différence due au mouvement entre les première et deuxième trames), soit, par exemple, de l'une des trois façons suivantes :

- de façon progressive, c'est-à-dire qu'on analyse en 625 lignes puis qu'on extrait deux images de 313 et 312 lignes ;
- par des systèmes couramment appelés à entrelacement et désentrelacement ; ou
- par le procédé dit de télécinéma dans lequel une image cinéma correspond à une image de télévision.

L'une de ces trois façons de prendre l'image est applicable quelle que soit la source de l'image, le dernier cas étant déjà couramment utilisé pour des films.

C'est le troisième des critères susmentionnés qui pose problème selon la norme SECAM. En effet, les sous-porteuses de chrominance de deux lignes adjacentes d'une image, c'est-à-dire des lignes n et n+312 de deux trames successives, sont modulées par des signaux correspondants (deux fois R-Y ou deux fois B-Y) avec seulement une opposition de phase initiale. Toutefois, du fait que ces sous-porteuses sont modulées en fréquence, la différence de phase initiale (opposition de phase) devient quelconque en cours de ligne même pour des valeurs très proches des signaux modulants $(R-Y)_n$ et $(R-Y)_{n+312}$ ou $(B-Y)_n$ et $(B-Y)_{n+312}$. Le problème du filtrage en peigne des signaux émis par les codeurs SECAM classiques n'est donc fondamentalement pas soluble de façon simple.

En se basant sur cette analyse, la présente invention propose de modifier les codeurs SECAM, sans toutefois modifier les caractéristiques de base de la norme.

La figure 4 illustre un codeur selon la présente invention. Ce codeur est identique au codeur illustré en figure 3 en ce qui concerne la matrice SECAM MAT et le modulateur SECAM de sous-porteuse SCSM. Selon la présente invention, on insère entre la sortie du SCSM et l'entrée de l'additionneur 10 un circuit comprenant un moyen de retard 20 correspondant à la durée de 312 lignes et un commutateur 21. Le commutateur 21 commute au rythme des trames. Ainsi, pendant une première trame, la première entrée Y de l'additionneur 10 reçoit les signaux de luminance Y de chaque ligne de cette trame et sur sa deuxième entrée la sortie directe du SCSM, c'est-à-dire des signaux R-Y et B-Y alternés correspondant aux signaux couleur RGB de la trame correspondante traitée par la matrice MAT. A la trame suivante, le commutateur 21 se trouve dans la position illustrée dans la figure. En ce cas, l'additionneur 10 reçoit les signaux de luminance Y correspondant à cette deuxième trame mais reçoit la sortie du SCSM retardée de la durée de 312 lignes, c'est-à-dire les signaux de chrominance correspondant à la trame précédente.

En d'autres termes, la présente invention prévoit d'émettre au cours d'une première trame les signaux de luminance et de chrominance propres à cette trame et au cours de la trame suivante, pour chaque ligne, les signaux de luminance propres à cette deuxième trame mais accompagnés des signaux de chrominance de la trame précédente, avec la phase opposée. Ainsi, deux lignes successives de l'image finale auront leurs propres signaux de luminance mais les mêmes signaux de chrominance, avec une opposition de phase.

Il est à noter que cette façon de faire respecte entièrement la norme SECAM car dans cette norme une séquence de changements de phase de sous-porteuse est appliquée à la première trame avec opposition de phase entre les lignes n (première trame) et n+312 (deuxième trame).

Il est généralement possible et souhaitable d'ajouter au signal vidéo composite un signal S de reconnaissance (par exemple pendant la période de suppression trame) du codage proposé. Ainsi le codage/décodage proposé devient rétrocompatible c'est-à-dire que les téléviseurs équipés du nouveau système de décodage peuvent traiter automatiquement et sans dégradation les anciennes et nouvelles émissions. Le codage proposé est aussi évidemment compatible c'est-à-dire que les anciens téléviseurs reçoivent la nouvelle émission sans perte visible de qualité.

Il est donc clair que deux lignes successives d'une image pourront alors servir de base à un filtrage en peigne puisqu'elles comportent exactement la même sous-porteuse de chrominance en opposition de phase qui sera donc facilement éliminée par addition de ces lignes.

Grâce à ce système, on n'a plus besoin de filtrer par un filtre à réjection de bande la composante de luminance et on profite de la pleine bande passante du signal de luminance SECAM qui est de 6 MHz, ce qui produit une amélioration sensible de la définition de l'image par rapport au cas où l'on était obligé d'éliminer de cette bande passante, par filtrage, les fréquences relatives au spectre de chrominance.

En ce qui concerne la chrominance, on dégrade bien entendu sa résolution verticale puisque les mêmes données de chrominance sont répétées sur deux lignes successives mais cette perte d'information de chrominance n'est pas sensible à l'oeil car, par le système SECAM, la résolution en chrominance est supérieure verticalement à ce qu'elle est horizontalement et l'utilisation de la présente invention ne fait qu'entraîner une résolution identique dans ces deux directions, c'est-à-dire qu'elle ne dégrade finalement que très peu l'appréciation de couleur pour un observateur.

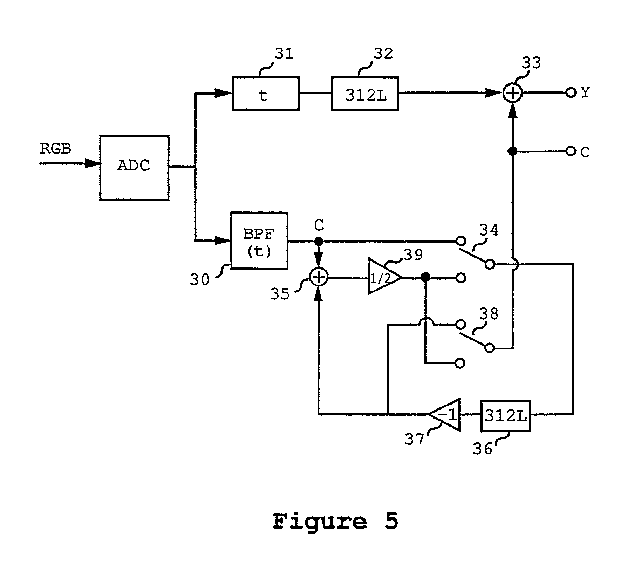

La figure 5 illustre une réalisation de filtre en peigne utilisable dans un décodeur (récepteur) recevant le signal transmis par un codeur tel que celui de la figure 4.

De préférence, ce décodeur fonctionne avec des circuits numériques et comprend à son entrée un convertisseur analogique/numérique ADC du signal vidéo d'entrée VS, si ce signal n'était pas déjà sous forme numérique. Ce signal est envoyé sur deux voies. Une voie de séparation du signal de chrominance C (R-Y ou B-Y) comprend un filtre passe-bande BPF 30 et l'autre voie comprend un circuit de retard 31 fournissant un retard t égal au retard inévitablement fourni par le filtre passe-bande 30. Le signal de sortie du circuit de retard 31 est envoyé par un circuit de retard 32 fournissant un retard d'une durée de 312 lignes à une première entrée d'un additionneur 33. Le signal de chrominance C à la sortie du filtre passe-bas 30 est envoyé à une première borne d'un commutateur à deux voies 34.

Un additionneur 35 reçoit sur sa première entrée le signal de chrominance C à la sortie du filtre passe-bas 30. La borne commune du commutateur 34 est reliée à l'entrée d'un circuit de retard d'une durée de 312 lignes (une trame) 36 dont la sortie est connectée par l'intermédiaire d'un inverseur 37 à la deuxième entrée de l'additionneur.

La sortie de l'additionneur 35 est reliée par l'intermédiaire d'un circuit diviseur par 2, 39, à la deuxième borne du commutateur 34 et à la deuxième borne d'un deuxième commutateur 38. La première borne du deuxième commutateur 38 est reliée à la sortie de l'inverseur 37. La borne commune du commutateur 38 est reliée à la deuxième entrée de l'additionneur 33. Le signal sur cette deuxième entrée constitue l'information de chrominance C et le signal de sortie de l'additionneur 33 constitue l'information de luminance Y.

Quand la ligne n arrive, le signal vidéo d'entrée VS correspond à $Y_n+C_n$. Le signal après une durée de 312 lignes correspond à $Y_n+312-C_n$ (à noter qu'il s'agit bien de la même composante de chrominance en raison du choix du codeur particulier de la figure 4). Les commutateurs 34 et 38 sont dans la position haute représentée pendant la première trame et dans la position basse pendant la deuxième trame. On constate, en suivant les signaux à travers les divers circuits de retard que l'on obtient bien toujours à la sortie de l'additionneur 33 une élimination complète de la composante de chrominance dans le signal Y, ce qui est le but recherché.

Bien entendu, la présente invention est susceptible de nombreuses variantes de réalisation. Notamment en ce qui concerne les valeurs des bandes passantes indiquées ainsi que le nombre de lignes (625) constituant une trame.

## Revendications

1. Codeur/décodeur SECAM, caractérisé en ce que :
   - le codeur comprend des moyens (20, 21) pour envoyer au cours de chaque trame d'une image les signaux de luminance (Y) propres à cette trame et, à chaque deuxième trame, des signaux de sous-porteuse de chrominance identiques à ceux de la trame précédente et opposés en phase ;
   - le décodeur comprend des moyens de filtrage en peigne des signaux de chrominance.

2. Ensemble codeur/décodeur SECAM selon la revendication 1, dans lequel l'analyse de l'image est effectuée de l'une ou l'autre des trois manières suivantes :
   - de façon progressive,
   - par entrelacement/désentrelacement,
   - par télécinéma.

Figure 1

Figure 2

Figure 3

Figure 4

Figure 5

Office européen
des brevets

**RAPPORT DE RECHERCHE EUROPEENNE**

Numero de la demande

EP 91 42 0006

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 280 277 (THOMSON-CSF)<br>* Page 3, ligne 18 - page 5, ligne 27; page 6, lignes 13-16; figures 2,3 *<br>--- | 1,2 | H 04 N 11/18<br>H 04 N 9/64 |
| A | FR-A-2 405 605 (ROBERT BOSCH)<br>* Page 1, ligne 40 - page 2, ligne 26; figure 1 *<br>----- | 1 | |

**DOMAINES TECHNIQUES RECHERCHES (Int. Cl.5)**

H 04 N

Le présent rapport a été établi pour toutes les revendications

| Lieu de la recherche | Date d'achèvement de la recherche | Examinateur |
|---|---|---|
| LA HAYE | 13-03-1991 | VAN DER ZAAL R. |

EPO FORM 1503 03.82 (P0402)